**Europäisches Patentamt**

**European Patent Office**

**Office européen des brevets**

(19)

(11) Veröffentlichungsnummer: **0 121 664**
**A2**

(12) # EUROPÄISCHE PATENTANMELDUNG

(21) Anmeldenummer: **84100980.6**

(22) Anmeldetag: **01.02.84**

(51) Int. Cl.³: **B 21 D 43/28**

(30) Priorität: **16.03.83 DE 3309369**

(43) Veröffentlichungstag der Anmeldung: **17.10.84**
Patentblatt 84/42

(84) Benannte Vertragsstaaten: **AT BE CH FR GB IT LI LU NL SE**

(71) Anmelder: **Reinhardt Maschinenbau GmbH, Richard-Wagner-Strasse 4-10, D-7032 Sindelfingen (DE)**

(72) Erfinder: **Stahl, Willy, Karl-Pfitzer-Strasse 41, D-7032 Sindelfingen (DE)**

(74) Vertreter: **Hoeger, Stellrecht & Partner, Uhlandstrasse 14c, D-7000 Stuttgart 1 (DE)**

(54) **Tafelschere zum Schneiden tafelförmiger Werkstücke, insbesondere Blechtafeln.**

(57) Die Erfindung bezieht sich auf eine Tafelschere zum Schneiden tafelförmiger Werkstücke, insbesondere Blechtafeln, mit einem ortsfesten sowie einem beweglichen Messer, mit einem vor diesen Messern angeordneten Scherentisch und mit einem hinter den Messern angeordneten Unterstützungstisch für das abgeschnittene Werkstück. Um bei einer solchen Tafelschere einen leichten Rücktransport des abgeschnittenen Werkstückteils vom Unterstützungstisch zurück zum Scherentisch zu ermöglichen, ist vorgesehen, daß über dem Unterstützungstisch ein angetriebener Schieber angeordnet ist, der die geschnittene Tafel vom Unterstützungstisch zwischen den geöffneten Messern hindurch zum Scherentisch zurückschiebt.

EP 0 121 664 A2

A 45 5o7 m  
m - 192  
22. Februar 1983

Anmelder: Reinhardt Maschinenbau GmbH  
Richard-Wagner-Straße 4 - 1o  
7o32 Sindelfingen

B e s c h r e i b u n g :

Tafelschere zum Schneiden tafelförmiger  
Werkstücke, insbesondere Blechtafeln

Die Erfindung betrifft eine Tafelschere zum Schneiden  
tafelförmiger Werkstücke, inbesondere Blechtafeln  
mit einem ortsfesten sowie einem beweglichen Messer,  
mit einem vor diesen Messern angeordneten Scherentisch und mit einem hinter den Messern angeordneten  
Unterstützungstisch für das abgeschnittene Werkstück.

Bei bekannten Tafelscheren dieser Art verbleibt das  
abgeschnittene Werkstück, also beispielsweise ein  
Stück einer Blechtafel, hinter den Messern auf dem  
Unterstützungstisch liegen. Manchmal ist dieser Unterstützungstisch abkippbar, so daß das abgeschnittene  
Werkstück nach unten, beispielsweise auf ein Transportband, abrutschen kann. Oft ist es erforderlich,  
das abgeschnittene Werkstück an die Vorderseite der  
Maschine zurückzuholen, um insbesondere weitere  
Schnitte vorzunehmen. Hierzu mußte bisher eine Bedienungsperson der Tafelschere an die Rückseite der  
Maschine gehen, um das abgeschnittene Werkstück dort  
abzuholen und an die Vorderseite der Maschine zu  
bringen.

- 4 -

A 45 5o7 m
m - 192
22. Februar 1983

Es ist bekannt, als Unterstützungstische hinter den
Messern einer Tafelschere motorisch angetriebene
Rollen- oder Transportbandtische einzusetzen, die
bei Bedarf über Fußpedal oder Programmsteuerung ausgelöst,den Antrieb auf rückwärts schalten und somit
das abgeschnittene Werkstück auf den Scherentisch
zur Bedienungsperson zurücktransportieren. Derartige
Tische sind jedoch sehr aufwendig, so daß ihr Einsatz
insbesondere bei einfachen und kleinen Tafelscheren
nicht vertretbar ist.

Es ist Aufgabe der Erfindung, eine einfache Anordnung
anzugeben, mit dessen Hilfe ein abgeschnittenes Werkstück von der Rück- auf die Vorderseite einer Tafelschere zurücktransportierbar ist.

Die Aufgabe wird erfindungsgemäß dadurch gelöst, daß
über dem Unterstützungstisch ein angetriebener Schieber
angeordnet ist, der die geschnittene Tafel vom Unterstützungstisch zwischen den geöffneten Messern hindurch zum Scherentisch zurückschiebt.

Die nachstehende Beschreibung einer bevorzugten Ausführungsform der Erfindung dient im Zusammenhang mit
beiliegender Zeichnung der weiteren Erläuterung. Es
zeigen:

Fig. 1        eine schaubildliche Ansicht einer
              Tafelschere;

A 45 5o7 m
m - 192
22. Februar 1983

Fig. 2    eine teilweise aufgebrochene Seitenansicht der Tafelschere aus Fig. 1;

Fig. 3    eine Schnittansicht entlang der
Linie 3-3 in Fig. 2 und

Fig. 4    eine Einzelansicht einer abgewandelten
Ausführungsform eines Anschlages bei
einer Tafelschere.

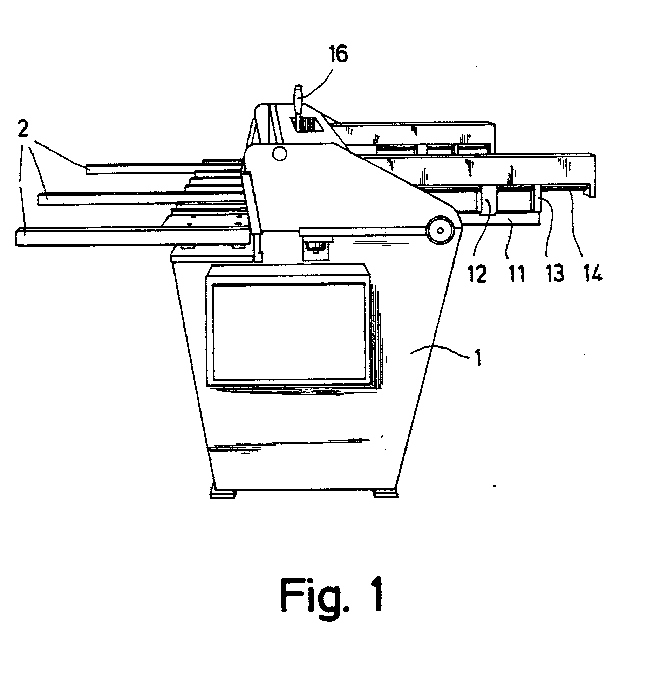

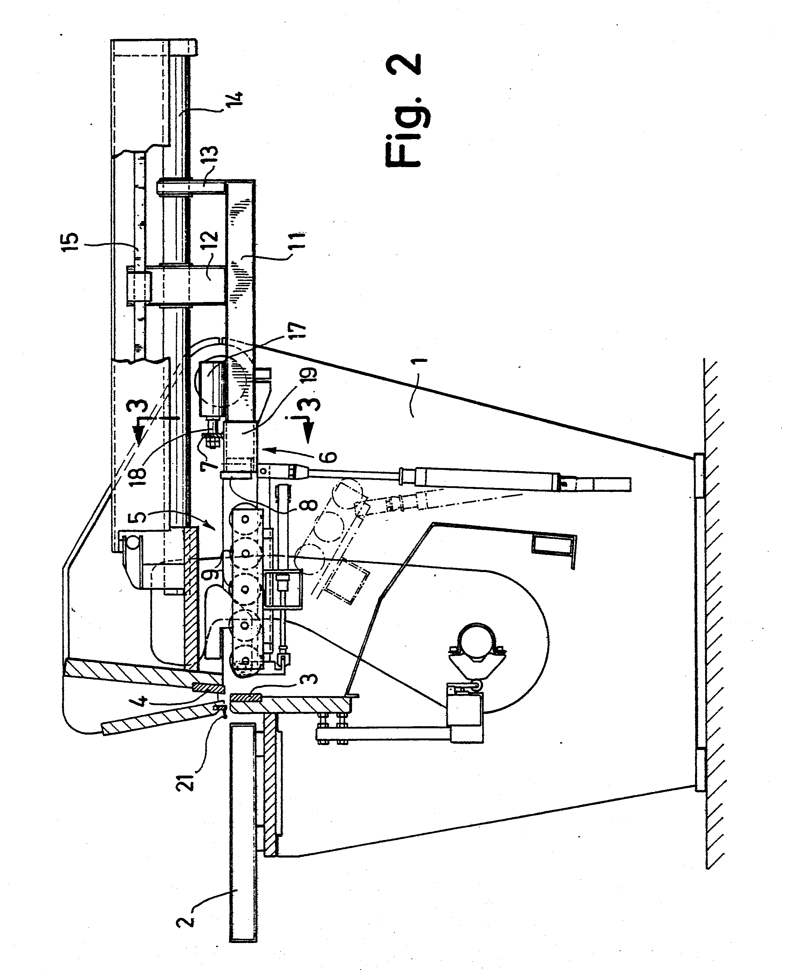

An der Vorderseite eines Maschinengestells 1 (in
Fig. 1 links) sind horizontal mehrere Holme 2 angeordnet, die einen sogenannten Scherentisch bilden,
auf den ein zu schneidendes Werkstück, beispielsweise
eine Blechtafel, aufgelegt und (in Fig. 1 nach rechts)
in Schnittposition geschoben wird. Dies erfolgt durch
eine Bedienungsperson, die sich auf der Vorderseite
der Tafelschere aufhält. Wie aus Fig. 2 hervorgeht,
weist die Tafelschere als wesentliche Bestandteile
ein ortsfestes Untermesser 3 sowie ein im wesentlichen
vertikal bewegliches Obermesser 4 auf. Auf der Rückseite dieser Messer und den als Scherentisch dienenden
Holmen 2 gegenüberliegend ist ein Unterstützungstisch
5 vorgesehen, der als Rollentisch mit freilaufenden
Rollen ausgebildet ist. Der Rollentisch 5 ist, wie
in Fig. 2 strichpunktiert dargestellt, in eine
Schräglage kippbar.

0121664

A 45 5o7 m
m - 192
22. Februar 1983

Beim Schneiden eines tafelförmigen Werkstückes wird
dieses auf die Holme 2 aufgelegt und durch die geöffneten Messer 3, 4 hindurch so weit eingeschoben,
daß ein Teil des Werkstückes vorbestimmter Breite
hinter den Messerkanten auf dem Unterstützungstisch 5
liegt. Danach wird das Obermesser 4 abgesenkt und
der auf dem Unterstützungstisch 5 liegende Teil des
Werkstücks abgetrennt. Wird nun der Tisch 5 gekippt,
so rutscht das abgeschnittene Werkstückteil selbsttätig herunter und der Tisch ist für einen neuen
Arbeitsvorgang bereit, sobald er wieder in seine
horizontale Ausgangslage zurückverschwenkt ist.

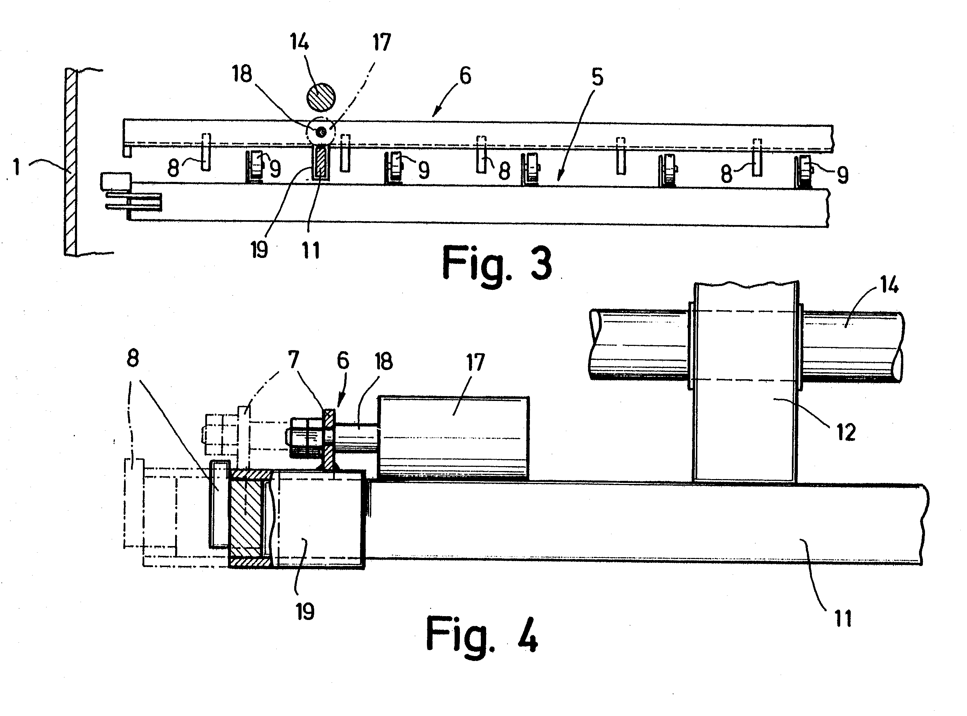

Falls an dem abgeschnittenen Werkstückteil ein weiterer Schnitt vorgenommen werden soll, so muß bei
bekannten Tafelscheren die Bedienungsperson von der
Vorderseite der Schere an deren Rückseite gehen, um
dort das vorher abgeschnittene Werkstückteil zu holen
und wieder nach vorne zu bringen. Um der Bedienungsperson diesen zeitraubenden Weg zu sparen, ist für
den Fall, daß an einem abgeschnittenen Werkstückteil
weitere Schnitte vorgenommen werden sollen oder das
Werkstückteil überhaupt an der Vorderseite der Maschine
wieder benötigt wird, erfindungsgemäß an der Rückseite
der Tafelschere ein angetriebener Schieber 6 angeordnet, mit dessen Hilfe der abgeschnittene Werkstückteil vom Unterstützungstisch 5 zwischen den geöffneten
Messern 3, 4 hindurch auf den von den Holmen 2 gebildeten Scherentisch zurücktransportiert werden
kann. Wie aus Fig. 2 und 3 hervorgeht, weist der

0121664

A 45 5o7 m
m - 192
22. Februar 1983

Schieber 6 eine über den Unterstützungstisch 5
in Querrichtung parallel zu den Kanten der Messer 3,
4 verlaufende, vorzugsweise L-förmige Schiene 7 auf,
von welcher Finger 8 nach unten zwischen die in
mehreren Reihen angeordneten Rollen 9 des Unterstützungstisches 5 abstehen. Die Schiene 7 ist starr
mit zwei Trägern 11 verbunden, die an der Rückseite
der Tafelschere parallel zu den Holmen 2 verlaufen.
Von den Trägern 11 stehen zwei Arme 12, 13 nach oben
ab, die runde Gleitführungsstangen 14 umgreifen. Auf
diese Weise ist der Träger 11 und die an ihm befestigte,
die Finger 8 tragende Schiene 7 gleitverschieblich.
Wie in Fig. 2 angedeutet, greift am Arm 12 ein Stahlband 15 an, welches unter mehrmaliger Umlenkung über
Rollen geführt im Maschinengestell verläuft. Das
Stahlband 15 ist, wie in Fig. 1 angedeutet, mit einem
Handhebel 16 verbunden, bei dessen Verschwenkung das
Stahlband 15 und damit der Träger 11 und die als
eigentliche Schieber dienenden Finger 8 verschoben
werden können. Somit ist es in einfacher Weise möglich, durch Verstellen des Handhebels 16 ein abgeschnittenes Werkzeugteil zumindest so weit zwischen
den geöffneten Messern 3, 4 zurückzuschieben, daß es
von einer an der Vorderseite der Maschine stehenden
Bedienungsperson ergriffen und ganz auf die Holme 2
zurückgezogen werden kann, wo es dann einer erneuten
Bearbeitung zugeführt werden kann.

A 45 5o7 m
m - 192
22. Februar 1983

Der im voranstehenden beschriebene Antrieb des von
der Schiene 7 und den Fingern 8 gebildeten Schiebers
6 über den Handhebel 16 und das Stahlband 15 ist nur
beispielsweise zu verstehen. Der Schieber könnte auch
in bekannter Weise mittels einer Schraubspindel vor-
und zurückverstellt werden. Die Verstellung braucht
auch keineswegs von Hand zu erfolgen. Das Stahlband
15 oder die Schraubspindel könnten auch von einem
Motor (Elektromotor, Hydraulikmotor, Pneumatikmotor)
angetrieben werden. Der Motor kann dabei durch Fußpedal oder durch eine Programmsteuerung der Tafelschere
jeweils im richtigen Zeitpunkt betätigt werden. Entscheidend ist in jedem Falle nur, daß der Schieber
so angeordnet ist und verschoben werden kann, daß
er an der rückwärtigen Kante eines abgeschnittenen
Werkstückteils angreift und dieses zwischen den geöffneten Messern 3, 4 hindurch wieder nach vorne in
Richtung auf den von den Holmen 2 gebildeten Scherentisch schieben kann, wo eine Bedienungsperson oder
auch eine automatisch arbeitende Vorschubzange das
Werkstück erfassen und ganz herausziehen kann.

Der angetriebene Schieber 6, welcher im wesentlichen
von der Schiene 7 und den Fingern 8 gebildet ist,
kann gleichzeitig auch als Anschlag zum Anlegen eines
in einem bestimmten Maß zu beschneidenden Werkstücks
verwendet werden. Der Schieber wird vor dem Einführen
des Werkstückes in die Tafelschere auf das vorbestimmte Maß eingestellt, das Werkstück wird eingeschoben und in Anlage mit dem Schieber gebracht,

A 45 5o7 m
m - 192
22. Februar 1983

wonach durch Absenken des Obermessers 4 das Werkstück
in dem gewünschten Maß beschnitten wird. Das abgeschnittene Stück kann schließlich durch Betätigung
des als Anschlag dienenden Schiebers wieder durch die
geöffneten Messer hindurch ganz oder teilweise zurückgeschoben werden.

Eine besonders bevorzugte Ausführungsform der Erfindung
ist im einzelnen in Fig. 4 dargestellt. Bei dieser
Ausführungsform ist die die Finger 8 tragende L-förmige
Schiene 7 nicht starr mit dem Träger 11 verbunden,
sondern relativ zu diesem verschiebbar. Die Relativverschiebung zwischen Schiene 7 und Träger 11 erfolgt
mit Hilfe eines Hydraulik- oder Pneumatikzylinders
17, der fest mit dem Träger 11 verbunden ist. Das
freie Ende seiner Kolbenstange 18 ist mit dem nach
oben ragenden Schenkel der Schiene 7 verschraubt.
Mit den horizontalen Schenkeln der Schiene 7 ist eine
Hülse 19 fest verbunden, die in der in Fig. 4 dargestellten Position der Anordnung den Träger 11 umgreift und sich auf ihm abstützt. Durch Betätigung
des Zylinders 17 wird die Kolbenstange ausgefahren,
wodurch der von der Schiene 7 und den Fingern 8 gebildete Schieber in die in Fig. 4 mit strichpunktierten Linien dargestellte Position gelangt. Hierdurch
kann ein an den Fingern 8 anliegendes Werkstück in
der bereits beschriebenen Weise durch die geöffneten
Messer 3, 4 hindurch wieder in Richtung auf den
Scherentisch zurückgeschoben werden, und zwar um ein

A 45 5o7 m
m - 192
22. Februar 1983

ganz bestimmtes Stück, welches durch den Hub des
Zylinders 17 vorgegeben ist.

Die Anordnung gemäß Fig. 4 hat den Vorteil, daß dann,
wenn der Schieber 6 gleichzeitig als Anschlag dient,
eine voreingestellte Position dieses Anschlages beim
Zurückschieben des geschnittenen Werkzeuges nicht
verändert zu werden braucht. Es genügt, den Zylinder
17 zu betätigen, der das Werkstück dann auf die
Vorderseite der Tafelschere zurücktransportiert.
Anschließend kehrt der Zylinder 17 wieder in seine
Ausgangslage zurück, wodurch der von den Fingern 8
gebildete Anschlag wieder seine frühere Position unverändert einnimmt. Wenn ein abgeschnittenes Werkstückteil vom Unterstützungstisch 5 durch den beschriebenen Schieber 6 wieder zurück in Richtung auf
den Scherentisch verschoben werden soll, darf natürlich der Unterstützungstisch 5 vorher nicht abgekippt
werden, wie dies in Fig. 2 strichpunktiert dargestellt
ist.

Wenn ein Werkstück durch Absenken des Obermessers 4
zerteilt wird, kann es manchmal vorkommen, daß das
abgeschnittene Werkstückteil sich zwischen dem
- gegebenenfalls als Anschlag dienenden - Schieber 6
und dem Untermesser 3 festklemmt, so daß es nicht
ohne weiteres aus der Tafelschere herausnehmbar ist.
In diesem Falle ist es vorteilhaft, den Schieber 6
zunächst eine kleine Rückwärtsbewegung (in Fig. 2
nach rechts) ausführen zu lassen, wodurch das

A 45 507 m
m - 192
22. Februar 1983

abgeschnittene Werkstückteil zwischen Schieber und
Untermesser 3 freikommt. Alsdann kann durch eine
Bewegung des Schiebers in entgegengesetzter Richtung
der Transport des abgeschnittenen Werkstückteils auf
die Holme 2 des Scherentisches erfolgen.

Weiterhin von Vorteil ist es, wenn der Unterstützungstisch 5 gemeinsam mit dem beweglichen Obermesser 4
nach unten absenkbar und wieder nach oben anhebbar
ist.

Die von den Rollen 9 gebildete Auflagefläche des
Unterstützungstisches 5 liegt vorzugsweise etwas
höher als die Schnittkante des unten liegenden, ortsfesten Messers 3, so daß der Schieber 6 das abgeschnittene Werkstückteil ohne Behinderung durch die
Kante des Messers 3 wieder zurückschieben kann. Dünne
Bleche können sich zwar dabei während des Schnittes,
wenn das Blech durch einen in Fig. 2 mit 21 bezeichneten Niederhalter auf den Scherentisch gespannt
wird, etwas durchbiegen, was jedoch unschädlich ist,
da diese Durchbiegung sich innerhalb des Elastizitätsbereiches des Bleches abspielt.

Bei Tafelscheren für dickere Werkstücke, insbesondere
Bleche, kann es günstig sein, den Unterstützungstisch
5 elastisch nach unten nachgebend aufzuhängen. Bei

A 45 5o7 m
m - 192
22. Februar 1983

einer abgewandelten Ausführungsform kann der Rahmen
des Unterstützungstisches 5 selbst ortsfest sein,
während die die Auflagefläche des Unterstützungstisches bildenden Elemente, also im beschriebenen
Ausführungsbeispiel die Rollen 9, federnd nach unten
nachgiebig im Rahmen befestigt sein können.

Der erfindungsgemäß vorgeschlagene Schieber, der,
wie erläutert, auch gleichzeitig als Anschlag verwendet werden kann, eignet sich insbesondere für
Tafelscheren mit programmgesteuertem Anschlagsystem,
bei dem nach Beschneiden einer bestimmten Anzahl von
Werkstücken der als Anschlag dienende Schieber immer
wieder automatisch in eine neue Position für andere
Maße und Stückzahlen fährt. Hier kann z. B. beim
Programmieren durch Betätigung einer bestimmten Taste
"Rücktransport" vorgegeben werden, in welchem Abschnitt des Programmes oder bei welchem Arbeitstakt
ein Rücktransport eines Werkstückteils mittels des
Schiebers 6 automatisch erfolgen soll.

A 45 5o7 m
m - 192
22. Februar 1983

Anmelder: Reinhardt Maschinenbau GmbH
Richard-Wagner-Straße 4 - 1o
7o32 Sindelfingen

P a t e n t a n s p r ü c h e :

1. Tafelschere zum Schneiden tafelförmiger Werkstücke, insbesondere Blechtafeln, mit einem ortsfesten sowie einem beweglichen Messer, mit einem vor diesen Messern angeordneten Scherentisch und mit einem hinter den Messern angeordneten Unterstützungstisch für das abgeschnittene Werkstück, d a d u r c h   g e k e n n z e i c h n e t , daß über dem Unterstützungstisch (5) ein angetriebener Schieber (6) angeordnet ist, der die geschnittene Tafel vom Unterstützungstisch zwischen den geöffneten Messern (3,4) hindurch zum Scherentisch (2) zurückschiebt.

2. Tafelschere nach Anspruch 1, dadurch gekennzeichnet, daß der angetriebene Schieber (6) gleichzeitig Anschlag zum Anlegen der in einem bestimmten Maß zu beschneidenden Werkstücke ist.

3. Tafelschere nach Anspruch 1, dadurch gekennzeichnet, daß über dem Unterstützungstisch (5) ein aus einem angetriebenen Träger (11) und wenigstens einer Anschlagfläche (7,8) bestehender Anschlag angeordnet ist und die Anschlagfläche als Schieber

A 45 5o7 m
m - 192
22. Februar 1983

durch einen besonderen Antrieb (17) relativ zum
Träger (11) verschiebbar ist.

4. Tafelschere nach Anspruch 2 oder 3, dadurch gekennzeichnet, daß der Unterstützungstisch (5) gemeinsam mit dem beweglichen Messer (4) bewegbar und
der Anschlag (7,8) während der Rückkehrbewegung
des Unterstützungstisches um eine kleine Strecke
von den Messern (3,4) weg verschiebbar ist.

5. Tafelschere nach einem der Ansprüche 1 bis 4, dadurch gekennzeichnet, daß die Auflagefläche des
Unterstützungstisches (5) etwas höher als die
Schnittkante des unten liegenden Messers (3) liegt.

6. Tafelschere nach einem der voranstehenden Ansprüche, dadurch gekennzeichnet, daß der Unterstützungstisch (5) elastisch nach unten nachgebend gehaltert ist.

7. Tafelschere nach Anspruch 6, dadurch gekennzeichnet, daß lediglich die die Auflagefläche bildenden
Elemente (9) des Unterstützungstisches (5) elastisch nach unten nachgebend gehaltert sind.

8. Tafelschere nach einem der voranstehenden Ansprüche, dadurch gekennzeichnet, daß der Schieber
(6) programmgesteuert ist.

0121664

Fig. 1

Fig. 2

0121664

Fig. 3

Fig. 4